# EUROPEAN PATENT APPLICATION

(11) **EP 4 059 635 A1**
(43) Date of publication of application: **21.09.2022**
(21) Application number: 20902898.4
(22) Date of filing: 17.12.2020
(51) Int. Cl.: B22F 1/00, B22F 7/04, B22F 9/00, H01B 1/22

(54) **SILVER PASTE, AND METHOD FOR PRODUCING JOINED ARTICLE**

(30) Priority: 20.12.2019 JP 2019230355
(71) Applicant: Mitsubishi Materials Corporation, Chiyoda-ku Tokyo 100-8117 (JP)
(72) Inventor: YASOSHIMA Tsukasa, Sanda-shi, Hyogo 669-1339 (JP); IWATA Kotaro, Naka-shi, Ibaraki 311-0102 (JP); KATASE Takuma, Sanda-shi, Hyogo 669-1339 (JP)
(74) Representative: Gille Hrabal Partnerschaftsgesellschaft mbB Patentanwälte
(86) International application number: PCT/JP2020/047185
(87) International publication number: WO 2021/125277

(57) **Abstract**

This silver paste includes a silver powder and a solvent, in which the silver powder includes first silver particles having a particle size of 100 nm or more and less than 500 nm, second silver particles having a particle size of 50 nm or more and less than 100 nm, and third silver particles having a particle size of 1000 nm or more and less than 10000 nm, and the content of the first silver particles is 12% by volume or more and 90% by volume or less, the content of the second silver particles is 1% by volume or more and 38% by volume or less, and the content of the third silver particles is 5% by volume or more and 80% by volume or less, regarding a total amount of the silver powder as 100% by volume.

## Description

### [Technical Field]

The present invention relates to a silver paste used when bonding members to each other, and a method of producing a bonded body using this silver paste.

Priority is claimed on Japanese Patent Application No. 2019-230355, filed December 20, 2019, the content of which is incorporated herein by reference.

### [Background Art]

A semiconductor device such as, for example, an LED or a power module has a structure in which a semiconductor element is bonded onto a circuit layer formed of a metal part.

When an electronic component such as a semiconductor element is bonded onto a circuit layer, for example, as shown in Patent Document 1, a method of using a solder material is widely used. Recently, from the viewpoint of environmental protection, for example, lead-free solder such as an Sn-Ag-based, Sn-In-based, or Sn-Ag-Cu-based solder has been the mainstream.

However, as described in Patent Document 1, when an electronic component such as a semiconductor element and a circuit layer are bonded with a solder material interposed therebetween, there was a risk that a portion of the solder may melt when used in a high temperature environment, and the bonding reliability between the electronic component such as a semiconductor element and the circuit layer may be lowered.

Particularly, the heat resistance of semiconductor elements themselves has been recently enhanced, and semiconductor devices may be used in a high temperature environment such as an engine room of an automobile. Furthermore, a large current is applied to semiconductor elements, and the amount of heat generation of semiconductor elements themselves is increasing. For this reason, it was difficult to deal with a structure in which bonding is achieved with a solder material as in the traditional way.

As a substitute for the solder material, for example, in Patent Documents 2 and 3, silver pastes including a silver powder having a particle size of submicron order and a solvent are proposed. In Patent Documents 4 and 5, silver pastes including a silver powder having a particle size of nanometer order and a solvent are proposed.

These silver pastes can be sintered under relatively low temperature conditions, and the melting point of a bonding layer formed after sintering is equivalent to that of silver. Therefore, this bonding layer formed from a sintered body of a silver paste has excellent heat resistance and can be stably used even in a high temperature environment or a large current application.

However, as described in Patent Documents 2 and 3, when a silver powder having a particle size of submicron order is used, there is a risk that many voids may be generated between the silver powder particles at the time of sintering, and the bonding strength may be insufficient.

As described in Patent Documents 4 and 5, when a silver powder having a particle size of nanometer order is used, an organic substance film is formed on the outer peripheral surface of the nano-sized silver powder particles, and there is a risk that an organic substance may remain in the bonding layer after sintering and the bonding strength may be decreased due to the gas generated by decomposition of this organic substance.

Thus, in Patent Document 6, a silver paste which contains two or more kinds of silver powders having different particle sizes and in which the amount of the organic substance in the silver powder is limited, is proposed.

In this silver paste, since silver powders having different particle sizes form aggregates and the amount of the organic substance in the silver powder is limited, a dense bonding layer can be formed while at the same time, the amount of organic substance remaining in the bonding layer can be suppressed, and the bonding strength can be secured.

### [Citation List]

### [Patent Documents]

[Patent Document 1]
   Japanese Unexamined Patent Application, First Publication No. 2004-172378
[Patent Document 2]
   PCT International Publication No. WO 2006/126614
[Patent Document 3]
   PCT International Publication No. WO 2007/034833
[Patent Document 4]
   Japanese Unexamined Patent Application, First Publication No. 2008-161907
[Patent Document 5]
   Japanese Unexamined Patent Application, First Publication No. 2011-094223
[Patent Document 6]
   Japanese Unexamined Patent Application, First Publication No. 2018-172764

### [Summary of Invention]

### [Technical Problem]

However, recently, the bonding area between members tends to be large. With regard to the silver paste described in Patent Document 6, when sintering proceeds in the periphery of a bonding surface to form a dense sintered body, the gas generated by volatilization of the solvent at the central portion of the bonding surface cannot be discharged to the outside, and there is a risk that coarse voids may be generated.

This invention was achieved in view of the circumstances described above, and it is an objective of the invention to provide a silver paste in which even when the bonding area is large, the generation of coarse voids can be suppressed while a dense structure can be formed in regions other than the voids, and which is capable of securing bonding strength, and a method of producing a bonded body using this silver paste.

### [Solution to Problem]

In order to solve the above-described problems, a silver paste according to an aspect of the present invention is a silver paste including a silver powder and a solvent, in which the silver powder has first silver particles having a particle size of 100 nm or more and less than 500 nm, second silver particles having a particle size of 50 nm or more and less than 100 nm, and third silver particles having a particle size of 1000 nm or more and less than 10000 nm, and a content of the first silver particles is in the range of 12% by volume or more and 90% by volume or less, a content of the second silver particles is in a range of 1% by volume or more and 38% by volume or less, and a content of the third silver particles is in a range of 5% by volume or more and 80% by volume or less, regarding a total amount of the silver powder as 100% by volume.

According to the silver paste of the above-described aspect, since the silver powder has first silver particles having a particle size of 100 nm or more and less than 500 nm, second silver particles having a particle size of 50 nm or more and less than 100 nm, and third silver particles having a particle size of 1000 nm or more and less than 10000 nm, each group of the particles in the above-mentioned range, a dense bonding layer can be formed as silver particles having a small particle size penetrate into the gaps between silver particles having a large particle size.

As third silver particles having a particle size of 1000 nm or more and less than 10000 nm are present, voids communicating with the outer peripheral portion of the bonding surface are formed, the gas generated by volatilization of the solvent at the central portion of the bonding surface can be discharged to the outside, and the production of coarse voids can be suppressed.

Therefore, even when the bonding area is large, the generation of coarse voids can be suppressed while a dense structure can be formed in regions other than the voids, and the bonding strength can be secured.

With regard to the silver paste according to an aspect of the present invention, it is preferable that the silver paste further includes a fatty acid silver salt and a fatty acid amine and has a complex formed as at least a portion of the fatty acid silver salt reacts with at least a portion of the fatty acid amine.

In this case, since the silver paste has a complex that is formed as at least a portion of the fatty acid silver salt reacts with at least a portion of the fatty acid amine, fine silver is precipitated from the complex at the time of sintering, and a more dense bonding layer can be formed as this precipitated fine silver fills the gaps between silver particles.

A method of producing a bonded body according to an aspect of the present invention is a method of producing a bonded body, the bonded body having a first member and a second member bonded with a bonding layer interposed therebetween, in which the bonding layer is formed by using the above-mentioned silver paste.

According to the method of producing a bonded body according to the above-described aspect, since the bonding layer is formed by using the above-mentioned silver paste, a dense bonding layer having no coarse voids can be formed, and a bonded body having excellent bonding strength between a first member and a second member can be produced.

### [Advantageous Effects of Invention]

According to the above-described aspects of the present invention, a silver paste which, even when the bonding area is large, can suppress the generation of coarse voids and can form a dense structure in regions other than the voids, and with which the bonding strength can be secured, and a method of producing a bonded body using the silver paste, can be provided.

### [Description of Embodiments]

Hereinafter, a silver paste, which is an embodiment of the present invention, and a method of producing a bonded body using this silver paste will be described.

The silver paste according to the present embodiment is used when bonding a first member and a second member, and the silver paste is used when, for example, a circuit layer (first member) of an insulating circuit substrate and a semiconductor element (second member) are bonded with a bonding layer interposed therebetween.

The silver paste according to the present embodiment includes silver powder and a solvent. In addition to the silver powder and the solvent, the silver paste may also contain a resin, a dispersant, a plasticizer, and the like as necessary.

The silver powder is defined to include first silver particles having a particle size of 100 nm or more and less than 500 nm, second silver particles having a particle size of 50 nm or more and less than 100 nm, and third silver particles having a particle size of 1000 nm or more and less than 10000 nm.

The particle size of the silver particles included in the silver powder can be obtained by, for example, measuring projected areas of the silver particles by using a SEM (electron scanning microscope), calculating the equivalent circle diameters from the obtained projected areas, and converting the calculated particle sizes to volume-based particle sizes.

Assuming that the total amount of the silver powder is 100% by volume, the content of the first silver particles is in the range of 12% by volume or more and 90% by volume or less, the content of the second silver particles is in the range of 1% by volume or more and 38% by volume or less, and the content of the third silver particles is in the range of 5% by volume or more and 80% by volume or less.

It is preferable to limit the amount of any silver particles that do not correspond to the first silver particles, the second silver particles, and the third silver particles to 5% by volume or less when the total amount of the silver powder is taken as 100% by volume.

As described above, since the silver powder includes the first silver particles, the second silver particles, and the third silver particles having different particle sizes, the second silver particles penetrate into the gaps between the first silver particles, and after sintering, a dense bonding layer can be formed.

Since the third silver particles are present, voids that communicate with the outer peripheral portion of the bonding surface are formed between the silver powder particles, and the gas generated by volatilization of the solvent can be discharged to the outside.

It is preferable that the content of the first silver particles is 27% by volume or more. It is preferable that the content of the first silver particles is 71% by volume or less.

It is preferable that the content of the second silver particles is 2% by volume or more. It is preferable that the content of the second silver particles is 30% by volume or less.

It is preferable that the content of the third silver particles is 25% by volume or more. It is preferable that the content of the third silver particles is 55% by volume or less.

It is preferable that the above-mentioned silver powder includes an organic substance composed of an organic reducing agent or a decomposition product thereof, and it is preferable that this organic substance is decomposed or volatilized at a temperature of 150°C.

Examples of the organic reducing agent include ascorbic acid, formic acid, and tartaric acid.

This organic substance composed of an organic reducing agent or a decomposition product thereof has an action of suppressing oxidation of the surface of silver particles and suppressing mutual diffusion between silver particles.

The above-mentioned silver powder can be produced by preparing each of first silver particles having a particle size of 100 nm or more and less than 500 nm, second silver particles having a particle size of 50 nm or more and less than 100 nm, and third silver particles having a particle size of 1000 nm or more and less than 10000 nm and mixing these at a predetermined blending ratio.

With regard to the first silver particles and the second silver particles, the silver particles can also be produced by a method of mixing an aqueous solution of an organic acid silver salt and an organic substance having a reducing action on silver, subsequently reducing the organic acid silver salt to be precipitated as silver particles, and obtaining a slurry of silver particles. Examples of the organic acid silver salt include silver oxalate, silver citrate, and silver maleate. Examples of the organic substance having a reducing action include ascorbic acid, formic acid, tartaric acid, and salts thereof. The particle size distribution of the silver particles obtainable by this production method can be appropriately adjusted by means of the blending amounts of the organic acid silver salt and the organic substance, and the temperature and time at the time of reduction.

Examples of the solvent used for the silver paste of the present embodiment include an alcohol-based solvent, a glycol-based solvent, an acetate-based solvent, a hydrocarbon-based solvent, and mixtures of these.

Examples of the alcohol-based solvent include α-terpineol, isopropyl alcohol, ethylhexanediol, and mixtures of these; examples of the glycol-based solvent include ethylene glycol, diethylene glycol, polyethylene glycol, and mixtures of these; examples of the acetate-based solvent include butyl carbitol acetate; and examples of the hydrocarbon-based solvent include decane, dodecane, tetradecane, and mixtures of these.

It is preferable that the silver paste according to the present embodiment further includes a fatty acid silver salt and a fatty acid amine and has a complex formed as at least a portion of the fatty acid silver salt reacts with at least a portion of the fatty acid amine.

As described above, as the silver paste contains a complex of silver, fine silver is precipitated from this complex at the time of sintering, and the bonding layer can be further densified by this precipitated silver.

Examples of the fatty acid silver salt include silver acetate, silver oxalate, silver propionate, silver myristate, and silver butyrate. Examples of the fatty acid amine include a primary amine, a secondary amine, and a tertiary amine. It is desirable that the carbon number of the fatty acid amine is preferably set to 8 or more and 12 or less. By setting the carbon number to 8 or more, the boiling point of the fatty acid amine is not lowered excessively, and deterioration of the printability of the silver paste can be suppressed. On the other hand, by setting the carbon number to 12 or less, sintering of the silver powder in the silver paste is promoted. Specific examples include, as the primary amine, ethylhexylamine, aminodecane, dodecylamine, nonylamine, and hexylamine; as the secondary amine, dimethylamine and diethylamine; and as the tertiary amine, trimethylamine and triethylamine.

When the silver paste according to the present embodiment includes a fatty acid silver salt and a fatty acid amine, it is preferable that the molar ratio of the fatty acid amine to the fatty acid silver salt, that is, the molar amount of the fatty acid amine / the molar amount of the fatty acid silver salt, is set to be in the range of 1.5 or more and 3 or less. By setting the molar amount of the fatty acid amine / the molar amount of the fatty acid silver salt to 1.5 or more, the proportion of the solid fatty acid silver salt is relatively lowered, and the fatty acid silver salt can be uniformly dispersed in the silver paste. On the other hand, by setting the molar amount of the fatty acid amine / the molar amount of the fatty acid silver salt to 3 or less, the viscosity of the silver paste can be suppressed from decreasing, and the printability can be secured.

The molar amount of the fatty acid amine / the molar amount of the fatty acid silver salt is more preferably set to 1.7 or more, and more preferably 2.0 or more. The molar amount of the fatty acid amine / the molar amount of the fatty acid silver salt is more preferably set to 2.8 or less, and more preferably 2.5 or less.

The silver paste of the present embodiment may be obtained by mixing a silver powder and a solvent and kneading the mixture with a three-roll mill or the like. When the amount of the silver paste is taken as 100% by mass, it is preferable that the content of the silver powder is set to be in the range of 70% by mass to 95% by mass, and it is preferable that the content of the solvent is set to be in the range of 5% by mass to 30% by mass. With regard to the silver paste, when the content of the silver powder is small, there is a risk that the viscosity of the silver paste may be lowered so that coating defects such as sagging may easily occur, and when the content is too high, there is a risk that the viscosity may increase so that the handleability may deteriorate.

When the silver paste according to the present embodiment further includes a fatty acid silver salt and a fatty acid amine, the silver paste may be obtained by mixing a complex solution obtainable by the following method, a silver powder, and a solvent.

As a method of producing the complex solution, first, a fatty acid silver salt, a fatty acid amine, and a solvent are prepared, and the fatty acid silver salt, the fatty acid amine, and the solvent are mixed to prepare a mixture. When the total amount of this mixture is taken as 100% by mass, it is preferable to mix the fatty acid silver salt at a proportion of 0.1% by mass to 40% by mass, the fatty acid amine at a proportion of 0.1% by mass to 60% by mass, and the solvent at a proportion of 80% by mass or less. The proportion of the solvent may be set to 0.1% by mass or more.

Next, it is preferable that the mixture is heated to 30°C to 100°C and stirred for 5 minutes to 10 hours to prepare a mixed solution. After being prepared, this mixed solution is cooled by lowering the temperature to room temperature (25°C). As a result, a complex solution of the fatty acid silver salt, the fatty acid amine, and the solvent is prepared. The heating temperature and the heating time for the mixture are set to be within the above-described ranges in order to make it easy to uniformly mix the fatty acid silver salt, the fatty acid amine, and the solvent. Examples of the solvent include an acetate-based solvent such as butyl carbitol acetate, a dihydric alcohol-based solvent such as 2-ethyl-1,3-hexanediol, and a monohydric alcohol-based solvent such as 1-octanol or α-terpineol.

When the amount of the mixture of the complex solution, the silver powder, and the solvent is taken as 100% by mass, it is preferable that the silver paste is obtained by mixing the complex solution at a proportion of 1% by mass to 30% by mass, the silver powder at a proportion of 70% by mass to 95% by mass, and the solvent at a proportion of 0% by mass to 29 by mass (0.8% by mass or more when combined with the solvent of the complex solution).

Next, a method of producing a bonded body using the silver paste according to the present embodiment will be described.

In the method of producing a bonded body according to the present embodiment, a bonded body in which a first member and a second member are bonded, with a bonding layer interposed therebetween, is produced. This bonded body may be, for example, a semiconductor device in which an insulating circuit substrate as a first member and a semiconductor element as a second member are bonded with a bonding layer interposed therebetween.

The silver paste according to the present embodiment is applied to one or both of the bonding surface of the first member and the bonding surface of the second member. Regarding the application method, for example, a spin coating method, a metal mask method, or a screen-printing method can be applied.

Next, the first member and the second member are laminated, with a silver paste interposed therebetween, to form a laminated body.

Then, by heat-treating this laminated body, a bonding layer made of a sintered body of the silver paste is formed, and the first member and the second member are bonded.

During the heat treatment, organic components such as the solvent included in the silver paste are decomposed to generate gas.

In the silver paste of the present embodiment, since the third silver particles having a particle size of 1000 nm or more and less than 10000 nm are present, voids communicating with the outer peripheral portion of the bonding surface are formed between the silver particles, and the above-mentioned gas can be discharged to the outside.

It is preferable that the heating temperature at the time of the heat treatment is set to be in the range of 120°C or higher and 400°C or lower.

The holding time at the heating temperature is preferably set to 30 minutes or more. The holding time at the heating temperature is preferably set to, for example, 120 minutes or less.

During the heat treatment, a pressure of 10 MPa or less may be applied to the laminated body in the laminating direction.

The atmosphere at the time of the heat treatment may be a nitrogen atmosphere. Preferably, the atmosphere may be adjusted to a nitrogen atmosphere having an oxygen concentration of 500 ppm (volume basis) or less. More preferably, the atmosphere may be adjusted to a nitrogen atmosphere having an oxygen concentration of 100 ppm (volume basis) or less.

According to the silver paste of the present embodiment having the above-mentioned configuration, the silver paste includes a silver powder and a solvent, and since the silver powder includes first silver particles having a particle size of 100 nm or more and less than 500 nm, second silver particles having a particle size of 50 nm or more and less than 100 nm, and third silver particles having a particle size of 1000 nm or more and less than 10000 nm, and when the total amount of the silver powder is taken as 100% by volume, the content of the first silver particles is in the range of 12% by volume or more and 90% by volume or less, the content of the second silver particles is in the range of 1 % by volume or more and 38% by volume or less, while the content of the third silver particles is in the range of 5% by volume or more and 80% by volume or less, silver particles having a small particle size penetrate into the gaps between silver particles having a large particle size so that a dense bonding layer can be formed. Since the third silver particles are present, voids communicating with the outer peripheral portion of the bonding surface are formed between the silver powder particles, the gas generated by volatilization of the solvent at the central portion of the bonding surface can be discharged to the outside, and the production of coarse voids can be suppressed.

Therefore, even when the bonding area is large, the generation of coarse voids can be suppressed while a dense structure can be formed in regions other than the voids, and the bonding strength can be secured.

When the silver paste of the present embodiment includes a fatty acid silver salt and a fatty acid amine and has a complex formed as at least a portion of the fatty acid silver salt reacts with at least a portion of the fatty acid amine, fine silver is precipitated from the complex at the time of sintering, this fine precipitated silver fills the gaps between the silver particles, and a more dense bonding layer can be formed.

According to the method of producing a bonded body according to the present embodiment, since the bonding layer is formed by using the silver paste according to the present embodiment, the gas generated by volatilization of the solvent at the central portion of the bonding surface can be discharged to the outside, the generation of coarse voids can be suppressed, a dense structure can be formed in regions other than the voids, and a bonded body having excellent bonding strength between a first member and a second member can be produced.

Thus, embodiments of the present invention have been described above; however, the present invention is not intended to be limited to these and can be appropriately modified to the extent that the technical ideas of the invention are maintained.

### [Examples]

The results of a verification experiment conducted to verify the effectiveness of the present invention will be described below.

As shown in Table 1, first silver particles having a particle size of 100 nm or more and less than 500 nm, second silver particles having a particle size of 50 nm or more and less than 100 nm, and third silver particles having a particle size of 1000 nm or more and less than 10000 nm were blended and then mixed.

This silver powder and a solvent (ethylene glycol) were mixed at the proportions of 70:30 as a mass ratio.

The obtained mixture was kneaded by using a three-roll mill to produce a silver paste.

In Table 1, for the item described such that the complex solution is "Present", a complex solution produced as follows was added to the silver paste. The silver powder, the solvent (ethylene glycol), and the complex solution were mixed at the proportions of 70:20:10 as a mass ratio.

The complex solution was obtained by the following method.

Silver acetate (fatty acid silver salt), aminodecane (fatty acid amine), and butyl carbitol acetate (solvent) were prepared, and when the total amount of silver acetate, aminodecane, and butyl carbitol acetate was taken as 100% by mass, 22% by mass of silver acetate and 41.3% by mass of aminodecane were taken, with the balance being butyl carbitol acetate, and these were introduced into a glass container together with a stirring bar of a stirrer. Then, the container was placed on a hot plate heated to 50°C, and the contents were stirred for 1 hour while rotating the stirring bar of the stirrer at 300 rpm to obtain a complex solution.

A copper sheet (thickness 2 mm) provided with gold plating on the outermost surface as a first member and an SiC element measuring 10 mm on each side (thickness 400 µm) provided with gold plating on the outermost surface as a second member were prepared.

The above-mentioned silver paste was applied on the surface of the first member by a metal mask method to form a paste layer having a thickness of 150 µm and an area with 10 mm on each side.

Next, the second member was laminated on this paste layer so as to have a paste layer of 130 µm, the assembly was charged into a heating furnace in a nitrogen atmosphere (O₂ concentration 100 volppm or less), the temperature was increased to 250°C at a temperature increase rate of 2°C/min, the temperature was held at 250°C for 60 minutes, and a bonded body in which the first member and the second member were bonded with a bonding layer interposed therebetween was produced. Pressurization of the laminated body was not performed at the time of heating.

With respect to the obtained bonded body, the presence or absence of voids and the porosity of a region other than voids were evaluated as follows.

### (Evaluation of voids)

For the above-mentioned bonded body, the entire bonding layer was observed with an ultrasonic flaw detector (FSP8V manufactured by Hitachi Power Solutions Co., Ltd.). The diameter in a case where a circle having the same area as the area of an unbonded part, which is shown in white, was drawn, that is, in a case where the circle-equivalent diameter was 0.1 mm or more, was considered as a void. A sample in which voids were recognized was indicated as "×", and a sample in which voids were not recognized was indicated as "∘".

### (Evaluation of porosity in region other than voids)

The above-mentioned bonded body was cut in the thickness direction in the vicinity of the center as viewed from the top, and the cut surface was subjected to CP processing. Any five sites in a region other than voids were observed by SEM at a magnification of 5000 times, the images were binarized with image processing software (Image-J), and the porosity was calculated. The arithmetic mean value of the porosities at the five sites observed is shown in Table 1.

### (Shear strength)

In the above-described method of producing a bonded body, a bonded body for measuring the shear strength was obtained in the same manner, except that the application area of the silver paste was set to 2.5 mm on each side and the size of the SiC element was set to 2.5 mm on each side.

The bonding strength of this bonded body was measured by using a shear strength evaluation tester (bonding tester PTR-1101, manufactured by Rhesca Co., Ltd.). Regarding the measurement, the first member of the bonded body was fixed horizontally, the second member was pressed in a horizontal direction from a lateral side by using a shear tool at a position 100 µm above the surface of the bonding layer, and the strength when the second member was broken was measured. The moving speed of the shear tool was set to 0.1 mm/sec. The test was performed three times per condition, and the arithmetic mean value of the results was used as the measured value.

**[Table 1]**

| | | Silver powder (% by volume) | | | | Complex solution | Shear strength (MPa) | Voids | Porosity in regions other than voids (%) |
|---|---|---|---|---|---|---|---|---|---|
| | | Second silver particles 50 to 100 nm | First silver particles 100 to 500 nm | Third silver particles 1000 to 10000 nm | Others | | | | |
| Invented Example | 1 | 9 | 40 | 50 | Balance | Absent | 23 | ∘ | 30 |
| | 2 | 1 | 18 | 80 | Balance | Absent | 21 | ∘ | 35 |
| | 3 | 7 | 12 | 80 | Balance | Absent | 25 | ∘ | 33 |
| | 4 | 4 | 90 | 5 | Balance | Absent | 22 | ∘ | 28 |
| | 5 | 38 | 56 | 5 | Balance | Absent | 26 | ∘ | 27 |
| | 6 | 2 | 38 | 55 | Balance | Present | 43 | ∘ | 25 |
| | 7 | 16 | 27 | 55 | Balance | Present | 47 | ∘ | 23 |
| | 8 | 3 | 71 | 25 | Balance | Present | 41 | ∘ | 21 |
| | 9 | 30 | 43 | 25 | Balance | Present | 50 | ∘ | 20 |
| Comparative Example | 1 | 18 | 80 | 0 | Balance | Absent | 21 | × | 15 |
| | 2 | 5 | 94 | 0 | Balance | Absent | 20 | × | 17 |
| | 3 | 38 | 60 | 0 | Balance | Absent | 25 | × | 13 |
| | 4 | 18 | 80 | 0 | Balance | Present | 45 | × | 10 |
| | 5 | 1 | 12 | 85 | Balance | Absent | 5 | ∘ | 37 |
| | 6 | 2 | 91 | 6 | Balance | Absent | 15 | ∘ | 28 |
| | 7 | 30 | 10 | 55 | Balance | Absent | 7 | ∘ | 30 |
| | 8 | 0 | 80 | 15 | Balance | Absent | 3 | ∘ | 30 |
| | 9 | 40 | 20 | 40 | Balance | Absent | 24 | × | 18 |

Voids were recognized in Comparative Examples 1 to 4 that did not include third silver particles having a particle size of 1000 nm or more and less than 10000 nm. It is speculated to be because the gas generated by volatilization of the solvent at the central portion of the bonding surface could not be discharged to the outside.

In Comparative Example 5 in which the content of the third silver particles having a particle size of 1000 nm or more and less than 10000 nm was 85% by mass, which was out of the range of the present invention, the porosity in regions other than the voids was high, and the shear strength was low.

In Comparative Examples 6 and 7 in which the content of the first silver particles having a particle size of 100 nm or more and less than 500 nm was out of the range of the present invention, the porosity in regions other than the voids was high, and the shear strength was low.

In Comparative Example 8 that did not include the second silver particles having a particle size of 50 nm or more and less than 100 nm, the porosity in regions other than the voids was high, and the shear strength was low.

Voids were recognized in Comparative Example 9 in which the content of the second silver particles having a particle size of 50 nm or more and less than 100 nm was 40% by mass, which was out of the range of the present invention. It is speculated to be because the gas generated by volatilization of the solvent at the central portion of the bonding surface could not be discharged to the outside.

In contrast, in the Invented Examples 1 to 9 of the present invention, voids were not recognized, and the shear strength was sufficiently high. Particularly, in the Invented Examples 6 to 9 of the present invention, to which a complex solution was added, the porosity in regions other than the voids was low, and the shear strength was further increased.

From the above description, according to the Invented Examples of the present invention, it was confirmed that a silver paste which, even when the bonding area is large, can suppress the generation of voids and can form a dense bonding layer, and with which the bonding strength can be secured, and a method of producing a bonded body using this silver paste, can be provided.

### [Industrial Applicability]

According to the present invention, a silver paste which, even when the bonding area is large, can suppress the generation of coarse voids and can form a dense structure in regions other than the voids, and with which the bonding strength can be secured, and a method of producing a bonded body using the silver paste, can be provided.

## Claims

1. A silver paste comprising:
a silver powder; and
a solvent,
wherein the silver powder includes first silver particles having a particle size of 100 nm or more and less than 500 nm, second silver particles having a particle size of 50 nm or more and less than 100 nm, and third silver particles having a particle size of 1000 nm or more and less than 10000 nm, and
a content of the first silver particles is in a range of 12% by volume or more and 90% by volume or less, a content of the second silver particles is in a range of 1% by volume or more and 38% by volume or less, and a content of the third silver particles is in a range of 5% by volume or more and 80% by volume or less, regarding a total amount of the silver powder as 100% by volume.

2. The silver paste according to Claim 1,
further comprising:
a fatty acid silver salt; and
a fatty acid amine,
wherein the silver paste has a complex formed as at least a portion of the fatty acid silver salt reacts with at least a portion of the fatty acid amine.

3. A method of producing a bonded body in which a first member and a second member are bonded with a bonding layer interposed therebetween,
wherein the bonding layer is formed by using the silver paste according to Claim 1 or 2.
